# EUROPÄISCHE PATENTSCHRIFT

(11) **EP 1 099 153 B1**
(45) Veröffentlichungstag und Bekanntmachung des Hinweises auf die Patenterteilung: **23.10.2002**
(21) Anmeldenummer: 99945914.2
(22) Anmeldetag: 06.07.1999
(51) Int. Cl.: G06F 5/06

(54) **SPEICHEREINRICHTUNG UND VERFAHREN ZUM BETREIBEN DER SPEICHEREINRICHTUNG**
STORAGE DEVICE AND A METHOD FOR OPERATING THE STORAGE DEVICE
DISPOSITIF A MEMOIRE ET SON PROCEDE DE FONCTIONNEMENT

(30) Priorität: 28.07.1998 US 124288
(43) Veröffentlichungstag der Anmeldung: 16.05.2001
(73) Patentinhaber: Infineon Technologies AG, 81669 München (DE)
(72) Erfinder: BARRENSCHEEN, Jens, D-81669 München (DE); FENZL, Gunther, D-85635 Höhenkirchen-Siegertsbrunn (DE)
(74) Vertreter: Jannig, Peter, Dipl.-Ing.
(86) Internationale Anmeldenummer: DE9902076
(87) Internationale Veröffentlichungsnummer: WO00007093

(56) Entgegenhaltungen:
- US-A- 4 158 235
- S. TZAFESTAS: "ON THE DESIGN OF MULTI-INPUT PERIODIC-BLOCK-OUTPUT BUFFERS WITH BINOMILA FEEDBACK" PROCEEDINGS OF THE NATIONAL ELECTRONICS CONFERENCE., Bd. 30, Nr. 30, 1975, Seiten 120-125, XP002123624 NATIONAL ENGINEERING CONSORTIUM INC. OAK BROOK, ILLINOIS., US
- CHU T -A ET AL: "DESIGN OF VLSI ASYNCHRONOUS FIFO QUEUES FOR PACKET COMMUNICATION NETWORKS" PROCEEDINGS OF THE INTERNATIONAL CONFERENCE ON PARALLEL PROCESSING,US,WASHINGTON, IEEE COMP. SOC. PRESS, Bd. -, Seite 397-400 XP000756967
- "SOFTWARE-CONTROLLED WRAP-AROUND BUFFER" IBM TECHNICAL DISCLOSURE BULLETIN,US,IBM CORP. NEW YORK, Bd. 28, Nr. 12, Seite 5314-5316 XP000715398 ISSN: 0018-8689

## Beschreibung

Die Erfindung betrifft eine zum Zwecke eines seriellen Datentransfers von binären Daten zwischen mindestens zwei Teilnehmern eines Datenübertragungssystems angeordneten Speichereinrichtung gemäß dem Oberbegriff von Patentanspruch 1 und ein Verfahren zum Betreiben dieser Speichereinrichtung.

Zum Zwecke der Datenkommunikation verschiedener Kommunikationsstationen werden immer häufiger Bussysteme zur Vernetzung dieser verteilten Systeme eingesetzt. Bei solchen Bussystemen, die besonders vorteilhaft in der Kraftfahrzeugelektronik eingesetzt werden, kommuniziert eine Kommunikationsstation über einen Datenbus mit mindestens einer weiteren an demselben Datenbus angeschlossenen Kommunikationsstation. Ein solches Bussystem, bei dem verschiedene Kommunikationsstationen miteinander über einen Datenbus als Kommunikationsmedium kommunizieren, kann beispielsweise in bekannter Weise als Controller-Area-Network (CAN-Bussystem), das beispielsweise in "CAN - Controller Area Network: Grundlagen und Praxis", Wolfhard Lawrenz (Hrsg.), 2. Auflage, Hüthig-Verlag, 1997, ausführlich beschrieben ist, ausgebildet sein.

Bei einem CAN-Bussystem werden aufgrund der Vielzahl der Kommunikationsstationen, die hier als Netzwerkknoten bezeichnet werden, verschiedene Prozessoren eingesetzt. In jeder der Netzwerkknoten kommuniziert dann die zentrale Recheneinheit (CPU) des entsprechenden Prozessors mit dem jeweiligen CAN-Controller, der seinerseits mit dem Datenbus gekoppelt ist. Aufgrund der unterschiedlichen Rechenauslastung der verschiedenen Netzwerkknoten verursacht durch die unterschiedlichen Rechenleistungen der entsprechenden zentralen Recheneinheiten der entsprechenden Prozessoren in diesen Netzwerkknoten und aufgrund der gewöhnlich definierten Übertragungsrate des mit dem CAN-Controllers verbundenen Datenbusses kommt es oftmals dazu, daß nicht alle über den Datenbus zu übertragenden Daten durch die jeweilige Netzwerkknoten in Echtzeit abgearbeitet werden können.

Eine Entkopplung der Zugriffe zwischen der zentralen Recheneinheit und dem CAN-Controller auf Datensätze kann jedoch gegenwärtig lediglich durch Mitprotokollieren per Software erfolgen. Dieser Vorgang ist jedoch äußerst aufwendig und erfordert zudem weitere Rechenleistung der Prozessoren.

Der vorliegenden Erfindung liegt daher die Aufgabe zugrunde, eine Schaltungsanordnung und ein Verfahren zum Betreiben dieser Schaltungsanordnung anzugeben, die einen Datentransfers zwischen einem Datensender und einem Datenempfänger, die fakultativ mit unterschiedlichen Datenübertragungsraten betrieben werden, auf einfache Weise und mit möglichst wenig Rechenaufwand hardwaremäßig ermöglichen.

Erfindungsgemäß wird diese Aufgabe durch eine gattungsgemäße Speichereinrichtung mit den Merkmalen des Patentanspruchs 1 und ein Verfahren mit den Merkmalen des Patentanspruchs 9 gelöst.

Mit der erfindungsgemäßen Speichereinrichtung und dem erfindungsgemäßen Verfahren zum Betreiben dieser Speichereinrichtung läßt sich auf einfache Weise und sehr flexibel eine hardwaremäßige Entkopplung des Datentransfers zwischen unterschiedlichen Teilnehmern vornehmen. Der Datentransfer erfolgt weitgehend datengesteuert und erfordert somit einen minimalen Rechenaufwand einer zentralen Recheneinheit.

Der besondere Vorteil der vorliegenden Erfindung liegt somit darin, daß eine programmierbare Anzahl von ansonsten unabhängigen Speicherobjekten eines Speichers zu FIFO-Strukturen organisiert werden. Diese FIFO-Strukturen erlauben es, daß aufeinanderfolgende Datenobjekte, die von einem Datensender über die Speichereinrichtung zu einem Datenempfänger übertragen werden sollen, mit einem Minimum an Softwareaufwand und im wesentlichen datengesteuert verarbeitet werden. Das zugrunde liegende Verfahren zum Betreiben der Speichereinrichtung wird nachfolgend als FIFO-Betriebsmodus bezeichnet.

Ein weiterer Vorteil der FIFO-Strukturen ergibt sich aus dem Zusammenspiel mit den jeweils anderen Speicherobjekten des Speichers. Dabei kann beispielsweise der eine Teilnehmer Datenblöcke in einer FIFO-Struktur erstellen und für einen Datentransfer bereitstellen. Der jeweils andere Teilnehmer kann dann auf die in der FIFO-Struktur abgelegten Nachrichten zugreifen und die einzelnen Nachrichten sequentiell abarbeiten. Diese Möglichkeit entlastet das interne Programm-Timing, da der erste Teilnehmer nicht für jeden Zugriff mit dem zweiten Teilnehmer synchronisiert werden muß.

Global gesehen dienen diese FIFO-Strukturen insbesondere dazu, die typischerweise asynchronen Zugriffe zwischen den Teilnehmern mit unterschiedlicher Datenübertragungsrate mit einer gewissen Datentiefe abzupuffern und auf diese Weise voneinander zu entkoppeln. Ein Datenverlust kann somit vermieden werden.

In einem weiteren Verfahren zum Betreiben der Speichereinrichtung lassen sich die zu einer FIFO organisierten Speicherobjekte auch vorteilhaft unabhängig voneinander in bekannter Weise als normale Speicherobjekte nutzen. Dieser Betriebsmodus wird als Gateway-Betrieb bezeichnet.

In einer besonders vorteilhaften Weiterentwicklung läßt die Architektur einer solchen zwischen zwei Teilnehmern angeordneten Speichereinrichtung eine Kombination der oben beschriebenen zwei Betriebsmodi zu: zum einen die herkömmliche Betriebsweise einzelner Speicherobjekte im sogenannten Gateway-Betriebsmodus und zum anderen die per Programm konfigurierbaren, im FIFO-Betrieb betriebenen Speicherobjekte. Der besondere Vorteil dieses sogenannten FIFO-Gateway-Betriebsmodus liegt in der großen Flexibilität und dem geringen zusätzlichen Hardware- und Softwareaufwand bei komplexen Datentransfersystemen.

Besonders vorteilhaft ist die Erfindung in einem Bussystem, das beispielsweise als sogenannte CAN-Bussysteme ausgebildet ist und in einem Kraftfahrzeugbordnetzsystemen einsetzbar ist. Im Fall eines CAN-Bussystemes kann dabei die Speichereinrichtung zur Pufferung des Datentransfers zwischen der zentralen Recheneinheit und dem CAN-Controller eines Netzwerkknotens fungieren.

Darüber hinaus werden heute zunehmend vernetzte Systeme mit mehreren Busystemen eingesetzt. Dabei steigt naturgemäß auch der Bedarf, daß die Kommunikationsteilnehmer der unterschiedlichen Bussysteme miteinander kommunizieren können. Zur Pufferung des Datentransfers zwischen den verschiedenen Bussystemen, die beispielsweise mit unterschiedlichen Datenübertragungsraten betrieben werden, kann vorteilhafterweise eine in einem Brückenmodul integrierte Speichereinrichtung eingesetzt werden.

Ausgestaltungen und Weiterbildungen der erfindungsgemäßen Anordnung und des erfindungsgemäßen Verfahrens sind in den Unteransprüchen angegeben.

Die Erfindung wird nachfolgend anhand der in den Figuren der Zeichnung angegebenen Ausführungsbeispielen näher erläutert. Es zeigt dabei:
- Figur 1: eine erfindungsgemäße zwischen zwei Teilnehmern angeordnete Speichereinrichtung;
- Figur 2: eine besonders vorteilhafte Ausführung eines Speichers einer erfindungsgemäßen Speichereinrichtung gemäß Figur 1, mit einer FIFO-Struktur, bei der die Speicherobjekte in verschiedenen Betriebsmodi betrieben werden;
- Figur 3: vier verschiedene Betriebsmodi zum Betreiben der Speicherobjekte des Speichers;
- Figur 4: ein Ausführungsbeispiel für eine Implementierung einer mit den erfindungsgemäßen Verfahrenen betriebenen Speichereinrichtung;
- Figur 5: ein weiteres Ausführungsbeispiel für eine Implementierung einer mit den erfindungsgemäßen Verfahrenen betriebenen Speichereinrichtung.

In allen Figuren der Zeichnung sind gleiche oder funktionsgleiche Elemente, sofern dies nicht anders angegeben ist, mit gleichen Bezugszeichen versehen.

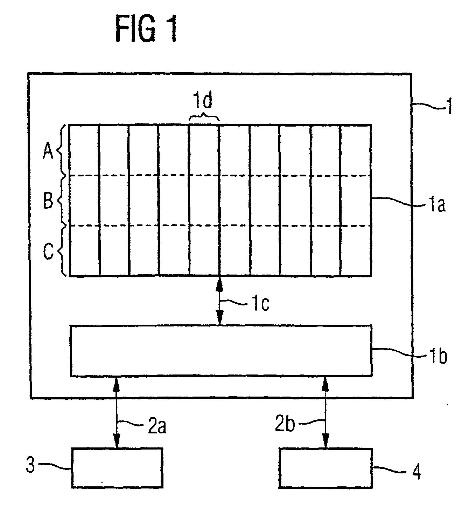

Figur 1 zeigt eine erfindungsgemäße zwischen zwei Teilnehmern angeordnete Speichereinrichtung. In Figur 1 ist mit 1 eine Speichereinrichtung bezeichnet, die zum Zwecke der Entkopplung eines Datentransfers zwischen zwei Teilnehmern 3, 4 angeordnet ist. Dabei ist die Speichereinrichtung über jeweils eine Verbindungsleitung 2a, 2b mit den beiden Teilnehmern 3, 4 verbunden.

Typischerweise, jedoch nicht notwendigerweise, weisen die beiden Teilnehmer 3, 4 eine unterschiedlich hohe Datenübertragungsrate auf. Die Richtung der Datentransfers kann beliebig, d.h. unidirektionell von einem der Teilnehmer 3, 4 zu einem anderen Teilnehmer 3, 4 oder bidirektionell in beide Richtungen, erfolgen. Jeder der Teilnehmer 3, 4 kann hier sowohl als Daten sendender als auch als Daten empfangender Teilnehmer 3, 4 fungieren. Nachfolgend wird der Daten sendende Teilnehmer 3, 4 als Datensender und der Daten empfangende Teilnehmer 3, 4 als Datenempfänger bezeichnet.

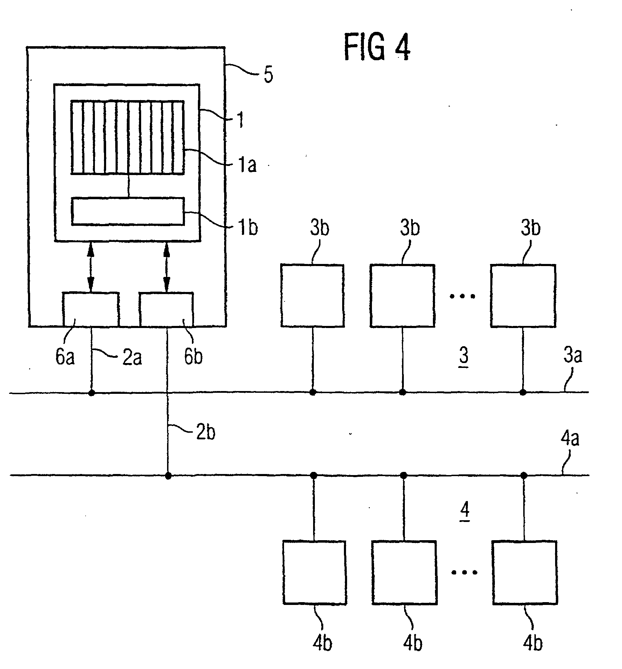

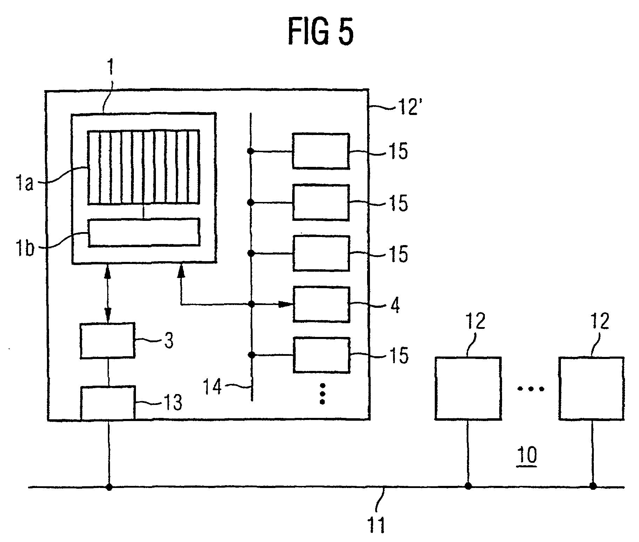

Die Anzahl der an der Speichereinrichtung 1 angeschlossenen Teilnehmer 3, 4 ist darüberhinaus nicht auf eine bestimmte Anzahl beschränkt, sondern es können eine beliebige Mehrzahl von Teilnehmern 3, 4 an der Speichereinrichtung 1 angeschlossen sein. Ferner ist auch die spezielle Ausgestaltung bzw. die Funktion der an der Speichereinrichtung 1 angeschlossenen Teilnehmer 3, 4 für die vorliegende Erfindung nicht weiter von Belang. Bevorzugte Ausgestaltungen dieser Teilnehmer 3, 4 werden in zwei Ausführungsbeispielen anhand der Figuren 4 und 5 beschrieben.

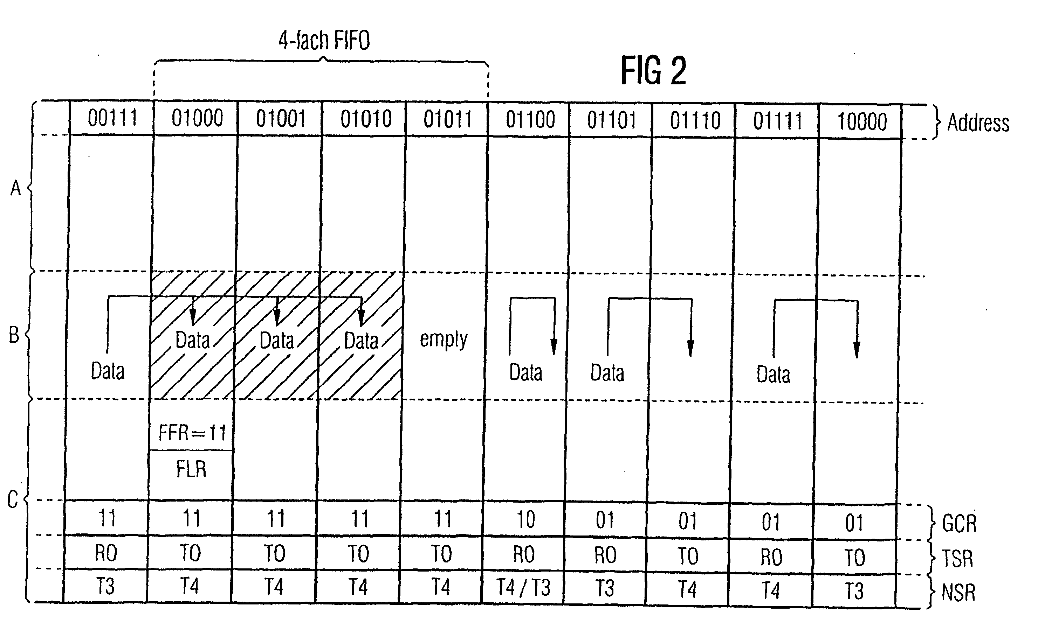

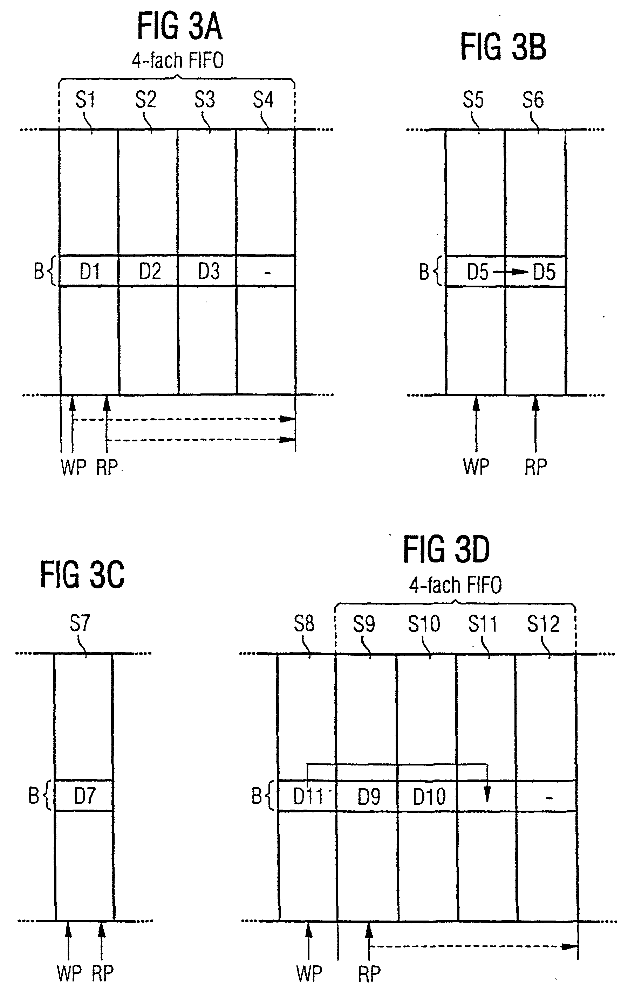

Die Speichereinrichtung 1 weist in bekannter Weise einen physikalischen Speicher 1a sowie eine Speicherverwaltungseinrichtung 1b auf. Die Speicherverwaltungseinrichtung 1b ist über einen typischerweise einen Adress-, einen Daten- und einen Steuerbus aufweisenden Bus 1c mit dem Speicher 1a verbunden. Der Speicher 1a ist objektweise organisiert, d.h. der Speicher 1a enthält eine Vielzahl von Speicherobjekten 1d. Typischerweise, jedoch nicht notwendigerweise, weisen die einzelnen Speicherobjekte 1d des Speichers 1a die gleiche Größe auf. Erfindungsgemäß kann dabei jedes der Speicherobjekte 1d des Speichers 1a flexibel und individuell jedem der (beiden) angeschlossenen Teilnehmern 3, 4 zugeordnet werden. Diese Betriebsmodi der Speicherobjekte 1d werden nachfolgend anhand der Figuren 2 und 3 ausführlich beschrieben.

Figur 2 zeigt den Aufbau eines Speichers einer erfindungsgemäßen Speichereinrichtung in einer besonders vorteilhaften Ausführungsform.

Im vorliegenden Ausführungsbeispiel sind die einzelnen Speicherobjekte 1d des Speichers 1a in drei Bereiche A bis C unterteilt. Der Dateninhalt und die Funktion dieser Bereiche A bis C wird nachfolgend kurz beschrieben:
1. Der Identifizierbereich A enthält im wesentlichen die Adresse und die Kennung (Identifier) des entsprechenden Speicherobjektes 1d. Insbesondere für CAN-Anwendungen ist der Identifizierbereich A 4 Byte breit Je nach CAN-Protokoll ist dabei der Identifier 11 Bit oder 29 Bit breit.
2. Im Datenbereich B werden die eigentlichen, zu transferierenden Daten zwischengespeichert. Der Datenbereich B ist mindestens so breit anzusetzen, wie die bei einem Datentransfer maximal pro Datenobjekt übertragbare Datenmenge. Bei CAN-Anwendungen ist die Breite des Datenbereiches B durch das Datenübertragungsprotokoll fest vorgegeben und ist maximal 8 Byte breit.
3. Der Steuerbereich C enthält die Kontroll- und Steuerfunktionen für einen Datentransfer zwischen den Teilnehmern 3, 4. Darin enthalten sind im wesentlichen Informationen über die Arbitrierung eines Speicherobjektes 1d zu den jeweils angeschlossenen Teilnehmern 3, 4 sowie die Art bzw. den Betriebsmodus des Datentransfers. Bei CAN-Anwendungen ist die Größe des Steuerbereiches C je nach Applikation variabel.

Die verschiedenen Speicherobjekte 1d lassen sich erfindungsgemäß in verschiedenen Betriebsmodi betreiben. Nachfolgend werden vier besonders vorteilhafte Betriebsmodi anhand der Figuren 3a bis 3d näher erläutert. Zur besseren Übersicht wurden in den Figuren 3a bis 3d lediglich die Datenbereiche B mit den darin enthaltenen Datenobjekten D1..D10, die verschiedenen Speicherobjekte sowie die Schreibzeiger WP und Lesezeiger RP des Datensenders bzw. des Datenempfängers gekennzeichnet.

### Erster Betriebsmodus:

Im ersten Betriebsmodus gemäß Figur 3a sind vier Speicherobjekte S1..S4 zu einer FIFO-Struktur (FIFO) angeordnet. Ein solcher FIFO kann in bekannter Weise als Ringpuffer ausgebildet sein. Im ersten Betriebsmodus, der nachfolgend auch als FIFO-Betriebsmodus bezeichnet wird, werden die zu übertragenden Datenobjekte D1..D3 über einen Schreibzeiger WP, der mit dem Datensender verbunden ist, in die dafür vorgesehenen Datenbereiche B der Speicherobjekte S1..S4 des FIFOs geschrieben. Dabei wird das erste Datenobjekt D1 in den Datenbereich B des ersten Speicherobjektes S1 des FIFOs geschrieben. Die jeweils folgenden Datenobjekte D2, D3 werden in den Datenbereichen B der entsprechend nachfolgenden Speicherobjekte S2, S3 abgelegt.

Für den Fall, daß vom Datensender weniger Datenobjekte D1..D3 gesendet werden, als das entsprechende FIFO aufnehmen kann, d. h. für den Fall, daß ein oder mehrere Datenbereiche B unbeschrieben bleiben, kann in einem der Speicherobjekt S1..S4 des FIFOs eine sogenannten Füllstandsanzeige vorgesehen, die anzeigt, welche der Speicherobjekte S1..S4 des FIFOs leer sind. Umgekehrt wäre auch denkbar, daß der Datensender mehr Datenobjekte sendet, als das entsprechende FIFO aufnehmen kann. Für diesen Fall kann eine Einrichtung vorgesehen sein, die beispielsweise nach dem Beschreiben des letzten oder des vorletzten Speicherobjektes S3, S4 des FIFOs ein Flug setzt, das ein Interrupt-Signal erzeugt. Über das Interupt-Signal kann dann beispielsweise die zentrale Recheneinheit den weiteren Datentransfer unterbinden.

Nachdem der Datensender über den Schreibzeiger WP ein Datenpaket bestehend aus den Datenobjekten D1..D3 auf den entsprechenden Speicherobjekten S1..S3 abgelegt hat, wird das FIFO zum Senden von Daten freigegeben. Der Datenempfänger kann dann diese Speicherobjekte S1..S3 über einen Lesezeiger RP auslesen.

### Zweiter Betriebsmodus:

Im zweiten Betriebsmodus, der nachfolgend auch als Gateway-Betriebsmodus bezeichnet wird, sind genau zwei Speicherobjekte S5, S6 für den Datentransfer vorgesehen. Das erste dieser Speicherobjekts S5 ist dem Datensender als Empfänger und das zweite Speicherobjekt S6 dem Datenempfänger als Sender zugeordnet. Ein für einen Datentransfer bestimmtes Dätenobjekt D5 wird über einen Schreibzeiger WP vom Datensender auf den entsprechenden Datenbereich B des ersten Speicherobjektes S5 geschrieben. Dieses Datenobjekt D5 wird anschließend auf den entsprechenden Datenbereich B des zweiten Speicherobjektes S6 kopiert. Von dort kann das Datenobjekt D5 über den Lesezeiger RP des Datenempfängers ausgelesen werden.

### Dritter Betriebsmodus:

Im dritten Betriebsmodus, der nachfolgend auch als Shared-Gateway-Betriebsmodus bezeichnet wird, ist lediglich ein einzelnes Speicherobjekt S7 für den Datentransfer vorgesehen. Dieses Speicherobjekt S7 ist dabei sowohl dem Datensender als Empfänger als auch dem Datenempfänger als Sender zugeordnet. Ein für einen Datentransfer vorgesehenes Datenobjekt D7 wird auf den entsprechenden Datenbereich B des Speicherobjektes S7 geschrieben. Nach dem Beschreiben des Speichobjektes S7 kann dieses Datenobjekt D7 vom Datenempfänger über einen Lesezeiger RP wieder ausgelesen werden.

### Vierter Betriebsmodus:

Der vierte Betriebsmodus, der nachfolgend auch als FIFO-Gateway-Betriebsmodus bezeichnet wird, stellt eine Mischung des FIFO-Betriebsmodus und des Gateway-Betriebsmodus dar. Dieser Betriebsmodus sieht ein FIFO mit einer Anzahl von FIFO-Speicherobjekten S9 bis S12 sowie eine davor angeordnetes, im Gateway-Betrieb betriebenes Speicherobjekt S8 vor. Die für einen Datentransfer vorgesehenen Datenobjekte D9..D11 werden über den Schreibzeiger WP auf den entsprechenden Datenbereich B des im Gateway-Betriebsmodus betriebenen Speicherobjektes S8 geschrieben. Die soeben auf das Speicherobjekt S8 geschriebenen Datenobjekte D9..D11 werden anschließend automatisch auf den entsprechenden Datenbereich B des nächsten freien FIFO-Speicherobjektes S9 kopiert, d. h. das erste Datenobjekt D9 wird auf den Datenbereich B des ersten FIFO-Speicherobjektes S9 und die nachfolgenden Datenobjekte D10, D11 auf die entsprechenden nachfolgenden Speicherobjekte S10, S11 geschrieben. Im vorliegenden Ausführungsbeispiel ist wiederum das letzte Speicherobjekt S12 des FIFOsleer, d.h. es enthält kein Datenobjekt. Anschließend kann der Datenempfänger über den Lesezeiger RP die Datenobjekte D9..D11 in der Reihenfolge, in der sie auf die entsprechenden Speicherobjekte S9..S11 geschrieben wurden, wieder auslesen.

Im vorliegenden Ausführungsbeispiel gemäß Figur 3d sind die FIFO-Speicherzellen S9..S12 dem Datenempfänger und das Gateway-Speicherobjekt S8 dem Datensender zugeordnet. Denkbar ist auch die FIFO-Speicherobjekte als Puffer zum Einlesen von Datenobjekten und das Gateway-Speicherobjekt zum Auslesen dieser Datenobjekte aus der FIFO-Struktur zu verwenden. Denkbar wäre es auch, zwei als Gateway betriebene FIFOs zu verwenden, wobei die erste FIFO-Struktur als Datenpuffer zum Einlesen und die zweite FIFO-Struktur als Datenpuffer zum Auslesen von Datenobjekten verwendet ist.

Der Auslesevorgang kann in den vorstehend beschriebenen Betriebsmodi entweder unmittelbar nach dem Beschreiben der entsprechenden Speicherobjekte oder erst nach einem Anforderungssignal des Datenempfängers erfolgen. Darüber hinaus kann, wie beispielsweise bei einem FIFO, das Bereitstellen der Datenobjekte selber schon als Anforderung für einen Datentransfer dienen.

Im Gateway-Betriebsmodus sowie im FIFO-Gateway-Betriebsmodus ist es häufig auch vorteilhaft, wenn nicht nur die für einen Datentransfer vorgesehenen Datenobjekte von einem Speicherobjekt zu einem weiteren kopiert werden, sondern daß zusätzlich auch die im Identifizierbereich A enthaltene Information mit den entsprechenden Datenobjekten mitkopiert werden. Darüber hinaus kann es auch vorkommen, daß nicht der gesamte Datenbereich eines Speicherobjektes beschrieben wurde. In diesem Fall kann dann vorteilhafterweise vorgesehen sein, daß lediglich die auf den entsprechenden Datenbereich geschriebenen Datenobjekte kopiert werden.

In den Figuren 3a bis 3d wird davon ausgegangen, daß jeweils genau ein Datenobjekt in den entsprechenden Datenbereich B eines Speicherobjektes Platz findet. Es wäre natürlich auch denkbar, daß die Datenmenge eines zu übertragenen Datenobjektes den enstsprechenden Datenbereich des Speicherobjektes nicht komplett ausfüllt. Alternativ wäre jedoch auch denkbar, daß mehr als ein Datenobjekt pro Speicherobjekt vorgesehen ist.

Figur 2 zeigt, wie bereits erwähnt, ein konkretes Ausführungsbeispiel zum Betreiben eines Speichers 1a. Die verschiedenen, bereits oben beschriebenen Betriebsmodi wurden in einer für den Datentransfer besonders vorteilhaften Ausgestaltung implementiert.

Der Speicher 1a, der hier lediglich ausschnittsweise dargestellt ist, enthält eine Vielzahl von in die Bereiche A..C unterteilte Speicherobjekte 1d. Jedes Speicherobjekt 1d ist dabei durch seine im Identifizierbereich A enthaltene binäre Adresse identifizierbar. Die Speichobjekte 1d sind in aufsteigender Folge der Adressen angeordnet.

Im Steuerbereich C jedes Speicherobjektes 1d ist ein sogenanntes Gateway-Kontrollregister GCR vorgesehen, welches den Betriebsmodus der verschiedenen Speicherobjekte 1d festlegt. Für den Fall, daß die oben genannten vier verschiedene Betriebsmodi zum Betreiben des Speichers 1a vorgegeben sind, ist das Gateway-Kontrollregister GCR zwei Bit breit und kann wie folgt ausgebildet sein:

| Registerinhalt | Betriebsmodus |
|---|---|
| 00 | FIFO |
| 01 | Gateway-Betrieb |
| 10 | Shared-Gateway |
| 11 | Gateway-FIFO |

Darüber hinaus ist im Steuerbereich C jedes Speicherobjektes 1d ein Knotenauswahlregister NSR enthalten, das eine Zuordnung der jeweiligen Speicherobjekte 1d zu den angeschlossenen Teilnehmern 3, 4 festlegen. T3 und T4 bedeutet im vorliegenden Beispiel, daß die entsprechenden Speicherobjekte 1d dem ersten Teilnehmer 3 bzw. dem zweiten Teilnehmer 4 zugeordnet ist. Wie in Figur 2 angedeutet, kann dabei ein Speicherobjekt entweder dem ersten Teilnehmer (T3), dem zweiten Teilnehmer (T4) oder wie im Shared-Gateway-Betriebsmodus beiden Teilnehmern (T3/T4) zugeordnet sein.

Die letztgenannten Register GCR, NSR können fakultativ von einem der Teilnehmer 3, 4, typischerweise der zentralen Recheneinheit, initialisiert werden. Sie sind dann aber, wenn sie einmal initialisiert wurden und für den Fall, daß keine erneute Initialisierung stattfindet, während des gesamten Datentransfers fest vorgegeben.

Der Ausschnitt des Speicher in Figur 2 enthält ein 4-fach FIFO bestehend aus vier FIFO-Speicherobjekten 1d (Adressen 01000...01011). Die Anzahl der Speicherobjekte 1d eines FIFOs ist vorteilhafterweise, jedoch nicht notwendigerweise, ein Vielfaches von zwei. Für diesen Fall lassen sich die FIFOs über ihre Adresse besonders einfach implementieren. Bei einer 5-Bit Adressbreite definiert sich ein 4-fach FIFO dadurch, daß die jeweils höherwertigen drei Ziffern (MSBs; most significant bits) der jeweiligen Adresse gleich sind. Die niederwertigen beiden Ziffern (LSBs; least significant bits) in aufsteigender Form umfassen dann die vier Speicherobjekte 1d des FIFOs.

Zur Definition eines FIFOs ist somit lediglich die Startadresse des FIFOs und die FIFO-Länge erforderlich. Die Länge des FIFOS, die je nach Applikation variabel eingestellt werden kann, ist in einem speziellen FIFO-Längenregister FLR im ersten Speicherobjekt 1d des FIFOs abgelegt. Im Beispiel entsprechend Figur 2 beginnt das 4-fach FIFO somit bei einem Speicherobjekt 1d, dessen Adresse mit den Ziffern 00 endet, und endet bei dem nächsten Speicherobjekt 1d, dessen Adresse mit den Ziffern 11 endet. Durch die adressorientierte Definition eines FIFOs ist damit auch festgelegt, daß ein FIFO ausschließlich bei Speicherobjekten 1d beginnt, dessen Adresse geradzahlig ist.

Typischerweise enthält eines der Speicherobjekte 1d des FIFOs, z.B. das jeweils erste Speicherobjekt 1d eines FIFOs, ein FIFO-Füllstandsregister FFR, welches angibt, wieviel der FIFO-Speicherobjekte 1d noch leer sind. Der Inhalt des FIFO-Füllstandsregister zeigt in der vorliegenden Implementierung auf das erste freie Speicherobjekt 1d des FIFOs.

Das dem Vierfach-FIFO nachfolgende Speicherobjekt, d. h. das Speicherobjekt 1d mit der Adresse 01100, wird im vorliegenden Ausführungsbeispiel in dem bereits beschriebenen Shared-Gateway-Betriebsmodus betrieben. Dieses Speicherobjekt 1d ist zum Empfangen von Daten von Teilnehmer 4 vorgesehen. Die soeben empfangenen Daten werden anschließend automatisch vom Teilnehmer 3 ausgelesen.

Die diesem Speicherobjekt nachfolgenden vier Speicherobjekte (Adressen 01101...10000) werden jeweils im Gateway-Betriebsmodus betrieben. Dabei ist das erste Speicherobjektpaar (Adresse 01101, 01110) für einen Datentransfer von Datenobjekten von Teilnehmer 3 zu Teilnehmer 4 vorgesehen. Das zweite Speicherobjektpaar (Adresse 01111, 10000) ist hingegen für einen Datentransfer von Teilnehmer 4 zu Teilnehmer 3 vorgesehen.

Unmittelbar vor dem 4-fach FIFO kann zusätzlich, wie in Figur 2 angedeutet, ein Speicherobjekt 1d (Adresse 00111), das im Gateway-Betrieb betrieben wird, angeordnet sein. In diesem Fall läßt sich dieses Speicherobjekt 1d zusammen mit dem 4-fach FIFO auch in dem bereits beschriebenen FIFO-Gateway-Betriebsmodus betreiben.

In einer besonders vorteilhaften Ausgestaltung kann im Gateway-Betrieb vorgesehen sein, daß die Adressen der ersten Speicherobjekte 1d von im Gateway-Betrieb betriebenen Speicherobjektpaaren ungeradzahlig ist.

Auf diese Weise kann durch die Implementierung sehr einfach gesteuert durch die Adressen sowie über die Steuerinformation in den Steuerbereichen C bestimmt werden, welche der Speicherobjekte 1d im FIFO-Betrieb und welche im Gateway-Betrieb betrieben werden. Die Funktionalität des erfindungsgemäßen Speichers 1a ist somit datengesteuert und wird durch die spezielle Speicheraufteilung bestimmt. Die Daten werden hier nicht beliebig über den Speicher 1a hin- und herkopiert, sondern es werden vielmehr die Datenobjekte vorbestimmter Datenbereiche B transferiert.

Ein solcher datengesteuerter Datentransfer ist daher sehr flexibel, da keine zusätzliche Hardware- oder Softwareprogrammierung erforderlich ist. Auf diese Weise wird die Rechenleistung einer angeschlossenen zentralen Recheneinheit nicht beeinträchtig, was zu keiner Verminderung der Leistungsfähigkeit des gesamten Kommunikationssystems führt.

Fakultativ kann im Steuerbereich C auch ein sogenanntes Transfer-Statusregister TSR enthalten sein, das festlegt, welche der Speicherobjekte 1d zum Senden (TO) und welche zum Empfangen (RO) von Daten vorgesehen sind. Vorteilhafterweise kann jedoch auf das Vorsehen eines solchen Transfer-Statusregister TSR verzichtet werden, wenn diese Zuordnung gesteuert wird durch die zu übertragenden Daten selbst. Beispielsweise kann im Steuerbereich festgelegt sein,
- daß die Speicherobjekte 1d der FIFOs als Transmit-Objekte (TO) nur zum Senden von Datenobjekten vorgesehen sind,
- daß die jeweils ersten Speicherobjekte 1d von Gateway-Speicherobjekten als Receive-Objekte (RO) nur zum Empfangen von Datenobjekten vorgesehen sind und
- daß die im Shared-Gateway-Betrieb betriebenen Speicherobjekte ebenfalls als Receive-Objekte (RO) vorgesehen sind.

Besonders vorteilhaft ist die Erfindung, wenn einer der Teilnehmer 3, 4 eine sehr viel höhere Datenübertragungsrate aufweist wie der andere Teilnehmer 3, 4. In diesem Fall können die FIFOs zur Datenpufferung zwischen dem "schnellen" und dem "langsamen" Teilnehmer 3, 4 verwendet werden. Typischerweise, jedoch nicht notwendigerweise, hängt die FIFO-Länge insbesondere vom Verhältnis dieser Datenübertragungsraten ab.

Darüber hinaus ist die Konfiguration mindestens eines Teiles der Speicherobjekte 1d als FIFO nicht ausschließlich zur Datenpufferung bei einem Datentransfer zwischen einem "schnellen" und einem "langsamen" Teilnehmer 3, 4 denkbar, sondern läßt sich im Rahmen der Erfindung auf jeglichen Datentransfer mit gleichen oder unterschiedlichen Datenübertragungsraten der Teilnehmer 3, 4 vorteilhaft anwenden.

Insbesondere können im FIFO-Betrieb betriebene Speicherobjekte 1d vorteilhaft auch dann eingesetzt werden, wenn beispielsweise der Datensender kontinuierlich Daten sendet. Diese Daten können dann vom Datenempfänger gesammelt aus dem FIFO ausgelesen und weiterverarbeitet werden. Auf diese Weise benötigt der Datenempfänger für das gesammelte Auslesen aufgrund geringerer Zugriffszeiten eine geringere Rechenleistung.

Alternativ wäre es selbstverständlich auch denkbar, daß das Auslesen und Weiterverarbeiten der Daten gleichschnell erfolgt, jedoch die Abstände zwischen den Schreib- und Lesezyklen unterschiedlich lang sind. Durch ein FIFO kann angepaßt an die jeweilige Applikation bzw. dem Systemdesign diesem Sachverhalt Rechnung getragen werden.

Figur 4 zeigt ein Ausführungsbeispiel für eine Implementierung einer mit den erfindungsgemäßen Verfahren betriebenen Speichereinrichtung.

In Figur 4 sind die an der Speichereinrichtung 1 angeschlossenen Teilnehmer 3 und 4 als Bussysteme ausgebildet. Jedes der beiden Bussysteme 3, 4, die beispielsweise als CAN-Netzwerke ausgebildet sein können, enthält eine Vielzahl von an jeweils einem Datenbus 3a, 4a angeschlossenen Netzwerkknoten 3b, 4b. Die Netzwerkknoten 3b, 4b der Bussysteme 3, 4 dienen dabei der Datenkommunikation untereinander. Die Ausgestaltung und die Anzahl der einzelnen Netzwerkknoten 3b, 4b der jeweiligen Bussysteme 3, 4 sowie die Ausgestaltung der jeweiligen Datenbusse 11, 21 sei für die vorliegende Erfindung nicht weiter von Belang.

Zum Zwecke des Datentransfers zwischen den beiden Bussystemen 3, 4 ist ein Brückenmodul 5, welches die erfindungsgemäße Speichereinrichtung 1 enthält, vorgesehen. Die Speichereinrichtung 1 ist dabei über jeweils eine Schnittstellenschaltung 6a, 6b und über Verbindungsleitungen 2a, 2b in bekannter Weise mit jedem der Datenbusse 3a, 4a der Bussysteme 3, 4 verbunden. Typischerweise weisen die Datenbusse 3a, 4a der beiden Bussysteme eine unterschiedlich hohe Datenübertragungsrate auf. Die Speichereinrichtung 1 des Brückenmoduls 5 kann hierbei der Entkopplung des Datentransfers zwischen den unterschiedlich schnellen Bussystemen dienen.

Figur 5 zeigt ein weiteres Ausführungsbeispiel für eine Implementierung einer mit den erfindungsgemäßen Verfahren betriebenen Speichereinrichtung.

Mit 10 ist hier ein Bussystem, das beispielsweise entsprechend einem der Bussysteme 3, 4 entsprechend Figur 3 ausgebildet ist, bezeichnet. Das Bussystem 10, das hier als CAN-Netzwerk ausgebildet ist, weist eine Vielzahl von an einem Datenbus 11 angeschlossen Netzwerkknoten 12, 12' auf. Die Speichereinrichtung 1, die in Figur 5 in einem der Netzwerkknoten 12' integriert ist, ist hier zwischen einem als CAN-Modul ausgebildeten ersten Teilnehmer 3 und einem als CPU-Modul ausgebildeten zweiten Teilnehmer 4 angeordnet. Die Speichereinrichtung 1 dient hier der Entkopplung des Datentransfers zwischen dem mit hohen Datenübertragungsraten betriebenen CPU-Modul 3 und dem mit relativ niedrigen Datenübertragungsraten betriebenen CAN-Modul.

Das CAN-Modul 3 ist darüber hinaus über eine Schnittstellenschaltung 13 mit dem Datenbus 11 des Bussystems 10 verbunden. Das CPU-Modul 4 ist über einen internen Bus 14 mit weiteren Modulen 15 des Netzwerkknotens 12' verbunden. Diese weiteren Module 15 können beispielsweise ein Timermodul, ein Interruptmodul, ein interner Speicher, die Spannungsversorgung des Netzwerkknotens 12', AD-Wandler-Module, etc. enthalten. Die Speichereinrichtung 1 ist der besseren Übersicht wegen in Figur 5 lediglich in einem der Netzwerkknoten 12' vorgesehen. Selbstverständlich kann eine erfindungsgemäße Speichereinrichtung 1 auch in mehreren bzw. in jedem der am Datenbus 11 angeschlossenen Netzwerkknoten 12, 12' vorgesehen sein.

In den vorstehenden Ausführungsbeispielen gemäß den Figuren 4 und 5 wird von einer Speichereinrichtung in einem CAN-Bussystem ausgegangen. Es sei jedoch ausdrücklich anzumerken, daß die vorliegende Erfindung auch vorteilhaft für jedes andere Kommunikationssystem zum Zwecke der Entkoppelung des Datentransfer zwischen einem Datensender und einem Datenempfanger eingesetzt werden kann.

Die oben beschriebenen Ausführungsbeispiele zeigen bevorzugte und vorteilhafte Realisierungen der mit dem erfindungsgemäßen Verfahren betriebenen Speichereinrichtung 1, welches zur Entkopplung des Datentransfers zwischen mindestens zwei angeschlossenen Teilnehmern 3, 4 geeignet ist. Die oben angegebenen Beispiele für vorteilhafte Alternativen sollen jedoch nicht als vollständig angesehen werden. Vielmehr ergeben sich selbstverständlich - eventuell weitere vorteilhafte - Alternativen und Kombinationen, die bei der Durchsicht der obigen Beschreibung nahegelegt werden.

## Patentansprüche

1. Speichereinrichtung,
- die zum Zwecke eines seriellen Datentransfers von binären Datenobjekten vorgegebener Datenbreite zwischen mindestens zwei Teilnehmern (3, 4) eines Datenübertragungssystems angeordnet ist und
- die eine Vielzahl von vorzugsweise gleich großen und durch ihre Adresse identifizierbarer Speicherobjekte (1d enthält,
- wobei die Datenbreite in jedem Speicherobjekt (1d) mindestens der vorgegebener Datenbreite eines für ein Datentransfer vorgesehenen Datenobjektes entspricht und
- wobei eine Mehrzahl von Speicherobjekten (1d) mindestens eine FIFO-Struktur (FIFO) bilden,
**dadurch gekennzeichnet, daß**
- mindestens eine jeweils eine Mehrzahl von Speicherobjekten (1d) enthaltende FIFO-Struktur (FIFO) vorgesehen ist, über die datengesteuert durch die zu übertragenden Datenobjekte der Datentransfer erfolgt.

2. Speichereinrichtung nach Anspruch 1,
**dadurch gekennzeichnet, daß**
die Teilnehmer (3, 4) mit unterschiedlich hohen Datenübertragungsraten betrieben werden.

3. Speichereinrichtung nach einem der vorhergehenden Ansprüche,
**dadurch gekennzeichnet, daß**
jeder der Teilnehmer (3, 4) sowohl Datensender als auch als Datenempfänger sein kann.

4. Speichereinrichtung nach einem der vorhergehenden Ansprüche,
**dadurch gekennzeichnet, daß**
jedes der Speicherobjekte (1d) zumindest
- einen Identifizierbereich (A), der die jeweilige Adresse des Speicherobjektes (1d) enthält,
- einen Datenbereich (B), in welchem die zu übertragenen Datenobjekte ablegbar sind, und
- einen Steuerbereich (C), der die Kontroll- und Steuerfunktionen für den Datentransfer enthält,
aufweist.

5. Speichereinrichtung nach einem der vorhergehenden Ansprüche,
**dadurch gekennzeichnet, daß**
jede der FIFO-Strukturen (FIFO) ein datengesteuertes FIFO-Füllstandsregister (FFR) aufweist, dessen Inhalt anzeigt, wieviel der Speicherobjekte (1d) der FIFO-Struktur (FIFO) bereits beschrieben sind und/oder welche leer sind.

6. Speichereinrichtung nach einem der vorhergehenden Ansprüche,
**dadurch gekennzeichnet, daß**
jedes Speicherobjekt (1d) ein Knotenauswahlregister (NSR) aufweist, dessen Inhalt anzeigt, welchen Teilnehmern (3, 4) die einzelnen Speicherobjekte (1d) zugeordnet sind.

7. Speichereinrichtung nach einem der vorhergehenden Ansprüche,
**dadurch gekennzeichnet, daß**
jedes Speicherobjekt (1d) ein Gateway-Kontrollregister (GCR) aufweist, dessen Inhalt den Betriebsmodus des jeweiligen Speicherobjektes (1d) festlegt.

8. Speichereinrichtung nach einem der Ansprüche 6 oder 7,
**dadurch gekennzeichnet, daß**
der Inhalt des Gateway-Kontrollregisters (GCR) und/oder des Knotenauswahlregisters (NSR) fakultativ über mindestens einen der Teilnehmer (3, 4) und/oder über eine zentrale Recheneinheit konfigurierbar ist.

9. Verfahren zum Betreiben aller Mittel der Speichereinrichtung nach einem der vorhergehenden Ansprüche 1 bis 8
**gekennzeichnet durch**
einen ersten Betriebsmodus mit den folgenden Verfahrensschritten:
(a) eine FIFO-Struktur (FIFO) wird bereitgestellt;
(b) eine Mehrzahl von für den Datentransfer vorgesehener Datenobjekte (D1...D3) werden von dem als Datensender fungierenden ersten Teilnehmer (3, 4) nacheinander in die entsprechend nacheinander angeordneten Speicherobjekte (S1...S4) der FIFO-Struktur (FIFO) geschrieben;
(c) dieser Vorgang wird solange wiederholt, bis entweder alle Speicherobjekte (S1...S4) der FIFO-Struktur (FIFO) beschrieben sind oder alle für den Datentransfer vorgesehenen Datenobjekte (D1...D3) auf den entsprechenden Speicherobjekten (S1...S3) der FIFO-Struktur (FIFO) abgelegt wurden;
(d) die FIFO-Struktur (FIFO) wird zum Auslesen freigegeben;
(e) die soeben auf die entsprechenden Speicherobjekte (S1...S3) der FIFO-Struktur (FIFO) geschriebenen Datenobjekte (D1...D3) werden von dem als Datenempfänger fungierenden zweiten Teilnehmer (3, 4) in der Reihenfolge des Beschreibens wieder ausgelesen.

10. Verfahren nach Anspruch 9,
**gekennzeichnet durch**
einen zweiten Betriebsmodus mit den folgenden Verfahrensschritten:
(a) ein Speicherobjektepaar bestehend aus zwei Speicherobjekten (S5, S6) wird bereitgestellt;
(b) ein für den Datentransfer vorgesehenes Datenobjekt (D5) wird von dem als Datensender fungierenden ersten Teilnehmer (3, 4) in das erste Speicherobjekt (S5) des Speicherobjektpaares geschrieben;
(c) das Datenobjekt (D5) wird vom ersten Speicherobjekt (S5) zum zweiten Speicherobjekt (S6) kopiert;
(d) das Datenobjekt (D5) wird von dem als Datenempfänger fungierenden zweiten Teilnehmer (3, 4) wieder ausgelesen.

11. Verfahren nach den Ansprüchen 9 und 10,
**gekennzeichnet durch**
einen dritten Betriebsmodus, bei dem eine erste FIFO-Struktur (FIFO) und eine zweite FIFO-Struktur oder ein einzelnes Speicherobjekt (S8) bereitgestellt wird, wobei die erste FIFO-Struktur (FIFO) zur Datenpufferung der einzulesenden oder der auszulesenden Datenobjekte (D9...D11) im ersten Betriebsmodus betrieben wird und die zweite FIFO-Struktur oder das einzelne Speicherobjekt (S8) zum Auslesen bzw. Einlesen der entsprechenden Datenobjekte (D9...D11) im zweiten Betriebsmodus betrieben wird.

12. Verfahren nach einem der Ansprüche 9 bis 11,
**gekennzeichnet durch**
einen vierten Betriebsmodus mit den folgenden Verfahrensschritten:
(a) ein Speicherobjekte (S7) wird bereitgestellt;
(b) ein für den Datentransfer vorgesehenes Datenobjekt (D7) wird von dem als Datensender fungierenden ersten Teilnehmer (3, 4) in das Speicherobjekt (S7) geschrieben,
(c) das Speicherobjekt (S7) wird zum Auslesen freigegeben;
(d) das Datenobjekt (D7) wird eben demselben Speicherobjekt (S7) von dem als Datenempfänger fungierenden zweiten Teilnehmer (3, 4) wieder.

13. Verfahren nach einem der Ansprüche 9 bis 12, bei dem die Speicherzellen (S1...S4) der FIFO-Struktur (FIFO) datengesteuert sowohl im ersten als auch im zweiten und/oder im dritten Betriebsmodus betreibbar sind.

14. Verfahren nach einem der Ansprüche 9 bis 13,
**dadurch gekennzeichnet, daß**
die Speicherobjekte (1a) datengesteuert im ersten Betriebsmodus und/oder im zweiten Betriebsmodus und/oder im dritten Betriebsmodus und/oder im vierten Betriebsmodus betreibbar sind.

15. Verfahren nach einem der Ansprüche 9 bis 14,
**dadurch gekennzeichnet, daß**
die Adressen der jeweils ersten Speicherobjekte (S1...S4) einer im ersten Betriebsmodus betriebenen FIFO-Struktur (FIFO) geradzahlig ist und die Adressen der jeweils ersten Speicherobjekte (S5, S2) eines im zweiten Betriebsmodus betriebenen Speicherobjektpaares ungeradzahlig ist.

16. Verfahren nach einem der Ansprüche 9 und 15,
**dadurch gekennzeichnet, daß**
das Auslesen der beschriebenen Speicherobjekte (1d) erst nach einem Anforderungssignal einer zentralen Recheneinheit oder des Datenempfängers erfolgt.

17. Speichereinrichtung nach einem der vorhergehenden Ansprüche 1 bis 8
**dadurch gekennzeichnet, daß**
die Speichereinrichtung in einem Brückenmodul (5) integriert ist und das Brückenmodul (5) zur Kopplung mindestens zweier als Bussysteme ausgebildeter Teilnehmer (3, 4) zwischen eben diesen angeordnet ist.

18. Speichereinrichtung nach einem der vorhergehenden Ansprüche 1 bis 8, die zwischen einem als zentrale Recheneinheit ausgebildeten ersten Teilnehmer (4) und einem zweiten Teilnehmer (3), der mit einem Datenbus (11) eines Bussystemes (10) gekoppelt ist, angeordnet ist.

19. CAN-Bussystem mit mindestens einer Speichereinrichtung nach einem der vorhergehenden Ansprüche, 1 bis 8, 17 und 18.

## Claims

1. Memory device
- which is arranged between at least two subscribers (3, 4) in a data transfer system for the purpose of serial data transfer of binary data objects of prescribed data length, and
- which contains a multiplicity of memory objects (1d) which are preferably of the same size and can be identified by their address,
- where the data length in each memory object (1d) corresponds to at least the prescribed data length of a data object intended for data transfer, and
- where a plurality of memory objects (1d) form at least one FIFO structure (FIFO),
**characterized in that**
- at least one FIFO structure (FIFO) containing a respective plurality of memory objects (1d) is provided which is used for carrying out the data transfer under data control by the data objects to be transferred.

2. Memory device according to Claim 1,
**characterized in that**
the subscribers (3, 4) are operated at different data transfer rates.

3. Memory device according to one of the preceding claims,
**characterized in that**
each of the subscribers (3, 4) can be both a data transmitter and a data receiver.

4. Memory device according to one of the preceding claims,
**characterized in that**
each of the memory objects (1d) has at least
- one identification area (A) which contains the respective address of the memory object (1d),
- one data area (B) in which the data objects to be transferred can be stored, and
- one control area (C) which contains the monitoring and control functions for the data transfer.

5. Memory device according to one of the preceding claims,
**characterized in that**
each of the FIFO structures (FIFO) has a data-controlled FIFO filling-level register (FFR) whose content indicates how many of the memory objects (1d) in the FIFO structure (FIFO) have already had information written to them and/or which of them are empty.

6. Memory device according to one of the preceding claims,
**characterized in that**
each memory object (1d) has a node selection register (NSR) whose content indicates the subscribers (3, 4) with which the individual memory objects (1d) are associated.

7. Memory device according to one of the preceding claims,
**characterized in that**
each memory object (1d) has a gateway control register (GCR) whose content stipulates the operating mode of the respective memory object (1d).

8. Memory device according to one of claims 6 or 7,
**characterized in that**
the content of the gateway control register (GCR) and/or of the node selection register (NSR) can optionally be configured by means of at least one of the subscribers (3, 4) and/or by means of a central processor.

9. Method for operating all the means in the memory device according to one of the preceding claims 1 to 8,
**characterized by**
a first operating mode having the following method steps:
(a) a FIFO structure (FIFO) is made available;
(b) a plurality of data objects (D1...D3) intended for the data transfer are successively written by the first subscriber (3, 4), acting as a data transmitter, to the memory objects (S1...S4) of the FIFO structure (FIFO) which are arranged correspondingly in succession;
(c) this process is repeated until either all the memory objects (S1...S4) in the FIFO structure (FIFO) have had information written to them or all of the data objects (D1...D3) intended for the data transfer have been stored on the appropriate memory objects (S1...33) in the FIFO structure (FIFO);
(d) the FIFO structure (FIFO) is enabled for reading out;
(e) the data objects (D1...D3) which have just been written to the appropriate memory objects (S1...S3) in the FIFO structure (FIFO) are read out again by the second subscriber (3, 4), acting as a data receiver, in the order in which they were written.

10. Method according to Claim 9,
**characterized by**
the second operating mode having the following method steps:
(a) a memory object pair comprising two memory objects (S5, S6) is made available;
(b) a data object (D5) intended for the data transfer is written by the first subscriber (3, 4), acting as a data transmitter, to the first memory object (S5) of the memory object pair;
(c) the data object (D5) is copied from the first memory object (S5) to the second memory object (S6) ;
(d) the data object (D5) is read out again by the second subscriber (3, 4), acting as a data receiver.

11. Method according to Claims 9 and 10,
**characterized by**
a third operating mode, in which a first FIFO structure (FIFO) and a second FIFO structure or a single memory object (S8) are/is provided, the first FIFO structure (FIFO) being operated in the first operating mode for the purpose of data buffering for the data objects (D9...D11) which are to be read in or which are to be read out, and the second FIFO structure or the single memory object (S8) being operated in the second operating mode for the purpose of reading out or reading in the appropriate data objects (D9...D11).

12. Method according to one of Claims 9 to 11,
**characterized by**
a fourth operating mode having the following method steps:
(a) a memory objects [sic] (S7) is made available;
(b) a data object (D7) intended for the data transfer is written by the first subscriber (3, 4), acting as a data transmitter, to the memory object (S7),
(c) the memory object (S7) is enabled for reading out;
(d) the data object (D7) is again [lacuna] to precisely the same memory object (S7) by the second subscriber (3, 4), acting as a data receiver.

13. Method according to one of Claims 9 to 12,
in which the memory cells (S1...S4) in the FIFO structure (FIFO) can be operated, under data control, both in the first and second operating modes and/or in the third operating mode.

14. Method according to one of Claims 9 to 13,
**characterized in that**
the memory objects (1a) can be operated, under data control, in the first operating mode and/or in the second operating mode and/or in the third operating mode and/or in the fourth operating mode.

15. Method according to one of Claims 9 to 14,
**characterized in that**
the addresses of the respective first memory objects (S1...S4) in a FIFO structure (FIFO) operated in the first operating mode is [sic] even-numbered, and the addresses of the respective first memory objects (S5, S2) of a memory object pair operated in the second operating mode is [sic] odd-numbered.

16. Method according to one of Claims 9 and 15,
**characterized in that**
the memory objects (1d) to which information has been written are read out only after a request signal from a central processor or from the data receiver.

17. Memory device according to one of the preceding Claims 1 to 8,
**characterized in that**
the memory device is integrated in a bridge module (5), and the bridge module (5) is arranged, for the purpose of coupling at least two subscribers (3, 4) in the form of bus systems, between these very subscribers.

18. Memory device according to one of the preceding Claims 1 to 8, which is arranged between a first subscriber (4), in the form of a central processor, and a second subscriber (3), which is coupled to a data bus (11) in a bus system (10).

19. CAN bus system having at least one memory device according to one of the preceding Claims 1 to 8, 17 and 18.

## Revendications

1. Unité mémoire,
- prévue pour un transfert en série d'objets de données binaires de largeur donnée entre au moins deux abonnés (3, 4) d'un système de transmission de données et
- contenant une multiplicité d'objets mémoire (1d) de préférence de même taille et identifiables grâce à leur adresse,
- dans laquelle la largeur de données dans chaque objet mémoire (1d) correspond au moins à la largeur donnée d'un objet de données prévu pour un transfert de données et
- dans laquelle une multiplicité d'objets mémoire (1d) forment au moins une structure FIFO,
**caractérisée en ce que**
- au moins une structure FIFO contenant une pluralité d'objets mémoire (1d) est prévue pour le transfert d'objets de données à transmettre sur la base des données.

2. Unité mémoire selon la revendication 1, **caractérisée en ce que** les abonnés (3, 4) disposent de vitesses de transmission de données différentes.

3. Unité mémoire selon l'une des revendications précédentes, **caractérisée en ce** chacun des abonnés (3, 4) peut jouer le rôle d'émetteur de données de même que de récepteur de données.

4. Unité mémoire selon l'une des revendications précédentes, **caractérisée en ce que** chacun des objets mémoire (1d) présente au moins
- une zone d'identification (A) contenant l'adresse correspondante de l'objet mémoire (1d),
- une zone de données (B) dans laquelle les objets de données à transmettre peuvent être déposés, et
- une zone de commande (C) contenant les fonctions de contrôle et de commande pour le transfert de données.

5. Unité mémoire selon l'une des revendications précédentes, **caractérisée en ce que** chacune des structures FIFO présente un registre d'état de remplissage FIFO (FFR) reposant sur des données, dont le contenu indique le nombre d'objets mémoire (1d) de la structure FIFO qui ont déjà été écrits et/ou sont vides.

6. Unité mémoire selon l'une des revendications précédentes, **caractérisée en ce que** chacun des objets mémoire (1d) présente un registre de sélection de noeuds (NSR) dont le contenu indique les abonnés (3, 4) auxquels les objets mémoire individuels (1d) sont affectés.

7. Unité mémoire selon l'une des revendications précédentes, **caractérisée en ce que** chacun des objets mémoire (1d) présente un registre de contrôle à passerelle (GCR) dont le contenu définit le mode d'exploitation de l'objet mémoire correspondant (1d).

8. Unité mémoire selon l'une des revendications 6 ou 7, **caractérisée en ce que** le contenu du registre de contrôle à passerelle (GCR) et/ou du registre de sélection de noeuds (NSR) est configurable de manière facultative par le biais d'au moins un des abonnés (3, 4) et/ou d'une unité centrale.

9. Procédé d'exploitation de tous les moyens de l'unité mémoire selon l'une des revendications précédentes 1 à 8, **caractérisé par** un premier mode d'exploitation comportant les phases suivantes :
(a) élaboration d'une structure FIFO ;
(b) une pluralité d'objets de données (D1 ... D3) prévus pour le transfert de données sont écrits par le premier abonné (3, 4) faisant office d'émetteur de données, les uns après les autres dans les objets mémoire disposés de façon correpondante en succession (S1 ... S4) de la structure FIFO ;
(c) cette procédure est répétée jusqu'à ce que tous les objets mémoire (S1 ... S4) de la structure FIFO soient écrits ou bien tous les objets de données (D1 ... D3) prévus pour le transfert de données soient déposés dans les objets mémoire correspondants (S1 ... S3) de la structure FIFO ;
(d) autorisation de lecture de la structure FIFO ;
(e) les objets de données (D1 ... D3) venant d'être écrits sur les objets mémoire correspondants (S1 ... S3) de la structure FIFO sont relus, dans la séquence d'écriture, par le second abonné (3, 4) faisant office de récepteur de données.

10. Procédé selon la revendication 9, **caractérisé par** un deuxième mode d'exploitation comportant les phases suivantes :
(a) élaboration d'une paire d'objets mémoire composée de deux objets mémoire (S5, S6) ;
(b) un objet de données (D5) prévu pour le transfert de données est écrit par le premier abonné (3, 4) faisant office d'émetteur de données, dans le premier objet mémoire (S5) de la paire d'objets mémoire ;
(c) l'objet de données (D5) est copié du premier objet mémoire (S5) vers le deuxième objet mémoire (S6) ;
(d) l'objet de données (D5) est relu par le second abonné (3, 4) faisant office de récepteur de données.

11. Procédé selon les revendications 9 et 10, **caractérisé par** un troisième mode d'exploitation dans lequel on élabore une première structure FIFO et une seconde structure FIFO ou un objet mémoire individuel (S8), tandis que la première structure FIFO sert au stockage intermédiaire des objets de données (D9 ... D11) à lire ou à relire dans le premier mode d'exploitation et tandis que la seconde structure FIFO ou bien l'objet mémoire individuel (S8) est exploité dans le deuxième mode d'exploitation pour relire ou pour lire les objets de données correspondants (D9 ... D11).

12. Procédé selon l'une des revendications 9 à 11, **caractérisé par** un quatrième mode d'exploitation comportant les phases suivantes :
(a) élaboration d'un objet mémoire (S7) ;
(b) un objet de données (D7) prévu pour le transfert de données est écrit par le premier abonné (3, 4) faisant office d'émetteur de données, dans l'objet mémoire (S7) ;
(c) autorisation de lecture de l'objet mémoire (S7) ;
(d) l'objet de données (D7) est relu dans le même objet mémoire (S7) par le second abonné (3, 4) faisant office de récepteur de données.

13. Procédé selon l'une des revendications 9 à 12, dans lequel les cellules de mémoire (S1 ... S4) de la structure FIFO sont exploitables sur la base des données, aussi bien dans le premier que le deuxième et/ou le troisième mode d'exploitation.

14. Procédé selon l'une des revendications 9 à 13, **caractérisé en ce que** les objets mémoire (la) sont exploitables sur la base des données, dans le premier mode d'exploitation et/ou dans le deuxième mode d'exploitation et/ou dans le troisième mode d'exploitation et/ou dans le quatrième mode d'exploitation.

15. Procédé selon l'une des revendications 9 à 14, **caractérisé en ce que** les adresses des premiers objets mémoire respectifs (S ... S4) d'une structure FIFO exploitée dans le premier mode d'exploitation sont paires et que les adresses des premiers objets mémoire respectifs (S5, S2) d'une paire d'objets mémoire exploitée dans le deuxième mode d'exploitation sont impaires.

16. Procédé selon l'une des revendications 9 et 15, **caractérisé en ce que** la relecture des objets mémoire écrits (1d) ne se déroule qu'après un signal d'interrogation d'une unité centrale ou du récepteur de données.

17. Unité mémoire selon l'une des revendications précédentes 1 à 8, **caractérisée en ce que** l'unité mémoire est intégrée dans un module passerelle (5) et **en ce que** le module passerelle (5) destiné au couplage d'au moins deux abonnés (3, 4) formés en systèmes de bus est précisément disposé entre ces derniers.

18. Unité mémoire selon l'une des revendications précédentes 1 à 8 qui est disposée entre un premier abonné (4) constituant une unité centrale et un second abonné (3) couplé avec un bus de données (11) d'un système de bus (10).

19. Système de bus CAN avec au moins une unité mémoire selon l'une des revendications précédentes, 1 à 8, 17 et 18.
